# EUROPEAN PATENT APPLICATION

(11) **EP 4 339 872 A1**
(43) Date of publication of application: **20.03.2024**
(21) Application number: 22841723.4
(22) Date of filing: 22.03.2022
(51) Int. Cl.: G06Q 50/08

(54) **ACTUAL MACHINE DIAGNOSTIC SYSTEM, ACTUAL MACHINE COMPLEX DIAGNOSTIC SYSTEM, AND ACTUAL MACHINE DIAGNOSTIC METHOD**

(30) Priority: 13.07.2021 JP 2021115700
(71) Applicant: KOBELCO CONSTRUCTION MACHINERY CO., LTD., Hiroshima-shi Hiroshima 731-5161 (JP)
(72) Inventor: GOTO Naoki, Hiroshima-shi, Hiroshima 731-5161 (JP); HIROZAWA Mitsunori, Hiroshima-shi, Hiroshima 731-5161 (JP); IJI Taira, Hiroshima-shi, Hiroshima 731-5161 (JP)
(74) Representative: Schön, Christoph
(86) International application number: PCT/JP2022/013195
(87) International publication number: WO 2023/286373

(57) **Abstract**

A system, and the like, capable of improving efficiency when information regarding a component of a work machine is acquired using a terminal device having a wireless communication function, are provided. A first external request signal is transmitted from a terminal device 100 to an actual machine communication station 210 for which wireless communication with the terminal device 100 is established, in accordance with a designated communication format. The "designated communication format" is determined in accordance with a designated attribute designated through a terminal input interface 101 for a designated attribute item regarding a work machine 200. Further, a first external response signal regarding a communication state of an actual machine communication network in the designated work machine 200 on which the actual machine communication station 210 is mounted is transmitted from the actual machine communication station 210 to the terminal device 100.

## Description

### Technical Field

The present invention relates to a technique for acquiring information regarding components such as a power source of a work machine using a terminal device having a wireless communication function.

### Background Art

A technique for diagnosing a state of a work machine through wireless communication has been proposed (see, for example, Patent Literatures 1 and 2).

### Citation List

### Patent Literature

Patent Literature 1: Japanese Patent Laid-Open No. 2010-198158
Patent Literature 2: Japanese Patent Laid-Open No. 2010-198159

### Summary of Invention

### Technical Problem

However, in a case where an abnormality occurs in a actual machine communication network mounted on a work machine, even if it is tried to diagnose the work machine after wireless communication between a terminal device and the work machine is established, there is a possibility that the trial processing may end in vain.

The present invention is therefore directed to providing a system, and the like, capable of improving efficiency when information regarding components of a work machine is acquired using a terminal device having a wireless communication function.

### Solution to Problem

An actual machine diagnostic system of the present invention includes
an external functional element which causes a terminal device to transmit an external request signal to a actual machine communication station for which wireless communication with the terminal device is established in accordance with a designated communication format and causes the terminal device to receive from the actual machine communication station an external response signal regarding a communication state of a actual machine communication network in a designated work machine on which the actual machine communication station is mounted, and
the designated communication format is determined in accordance with a designated attribute designated through an input interface of the terminal device for a designated attribute item regarding a work machine and is converted into an actual machine communication format for acquiring information regarding a designated component of the designated work machine by utilizing communication in the actual machine communication network by the actual machine communication station.

According to the actual machine diagnostic system having the configuration, the external request signal is transmitted from the terminal device to the actual machine communication station for which wireless communication with the terminal device is established, in accordance with the designated communication format. The "designated communication format" is determined in accordance with the designated attribute designated through the input interface of the terminal device for the designated attribute item regarding the work machine. Further, the "designated communication format" is converted into the actual machine communication format for acquiring information regarding the designated component of the designated work machine by utilizing communication in the actual machine communication network by the actual machine communication station. Then, the external response signal regarding the communication state of the actual machine communication network in the designated work machine on which the actual machine communication station is mounted is transmitted from the actual machine communication station to the terminal device.

It is possible to confirm a situation where an abnormality occurs in a communication state in the actual machine communication network mounted on the designated work machine, and eventually, a situation where it is difficult or impossible to acquire information regarding the designated component of the designated work machine through communication by way of the actual machine communication network, on the basis of the external response signal received by the terminal device or a reception situation of the external response signal. It is therefore possible to avoid a situation where it is tried to acquire information regarding the designated component as a diagnostic result of the designated work machine using the terminal device despite such a situation, so that efficiency of the diagnostic processing can be improved.

### Brief Description of Drawings

FIG. 1 is an explanatory diagram regarding a configuration of an actual machine diagnostic system as one embodiment of the present invention.
FIG. 2 is an explanatory diagram regarding a first diagnostic processing function of the actual machine diagnostic system.
FIG. 3A is an explanatory diagram regarding one attribute selection menu screen.
FIG. 3B is an explanatory diagram regarding another attribute selection menu screen.
FIG. 4 is an explanatory diagram regarding a second diagnostic processing function of the actual machine diagnostic system.
FIG. 5A is an explanatory diagram regarding one diagnostic item selection menu screen.
FIG. 5B is an explanatory diagram regarding another diagnostic item selection menu screen.
FIG. 5C is an explanatory diagram regarding a cautionary note screen.
FIG. 5D is an explanatory diagram regarding a diagnosis instruction screen.
FIG. 6 is an explanatory diagram regarding another embodiment of the second diagnostic processing function.
FIG. 7A is an explanatory diagram regarding a component designation screen.
FIG. 7B is an explanatory diagram regarding a unique identifier input screen.
FIG. 7C is an explanatory diagram regarding a screen for reading a unique identifier.

### Description of Embodiments

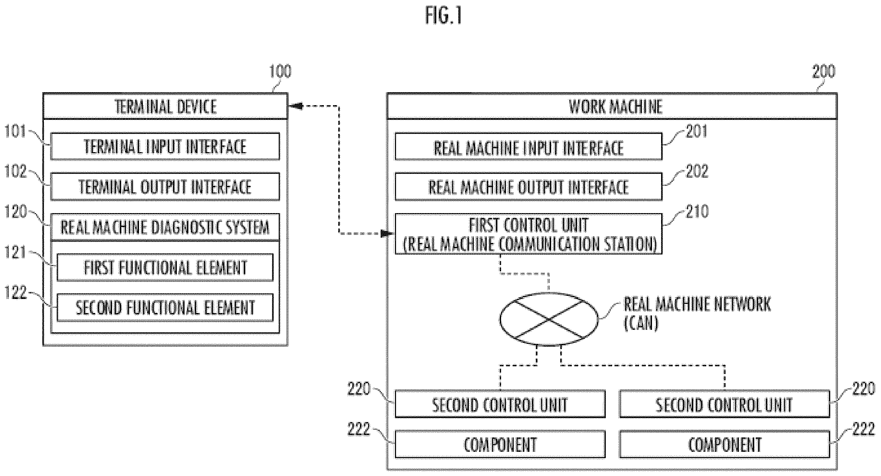

An actual machine diagnostic system 120 illustrated in FIG. 1 is mounted on a terminal device 100. The actual machine diagnostic system 120 recognizes a diagnostic result of a component 222 such as an engine and an injector mounted on a work machine 200 on the basis of communication with an actual machine communication station 210 mounted on the work machine 200.

### (Configuration of terminal device)

The terminal device 100 includes a smartphone, a tablet terminal, a personal computer, a beacon, or the like. As illustrated in FIG. 1, the terminal device 100 includes a terminal input interface 101 and a terminal output interface 102. The terminal input interface 101 includes a capacitance type touch button constituting a touch panel. The terminal output interface 102 includes an acoustic output device in addition to an image display device constituting the touch panel.

### (Configuration of actual machine diagnostic system)

The actual machine diagnostic system 120 includes an arithmetic processing device (a single-core processor, a multicore processor or a processor core constituting this), a storage device (a memory such as a ROM and a RAM) and wireless communication equipment. The actual machine diagnostic system 120 includes a first functional element 121 (external functional element) and a second functional element 122 (external functional element). As a result of the arithmetic processing device reading out software (application software) and data from the storage device and executing arithmetic processing on the data in accordance with the software, the first functional element 121 and the second functional element 122 exert respective functions.

### (Configuration of work machine)

The work machine 200, which is, for example, a crawler excavator (construction machine), includes a crawler type lower traveling body, an upper revolving body, a revolving mechanism for revolving the upper turning body with respect to the lower traveling body, and a work mechanism (work attachment) provided at a central front portion of the upper turning body. The work machine 200 includes an actual machine input interface 201, an actual machine output interface 202, a first control unit 210, one or more second control units 220, and the component 222 such as an engine as a power source.

The actual machine input interface 201 includes an actual machine operation mechanism constituted with a plurality of operation levers positioned around a seat positioned inside a cab (operator room) provided in the upper turning body. The actual machine output interface 202 is positioned in the upper turning body and includes an audio and image output device positioned inside the cab likewise for outputting an image acquired through an imaging device that captures an image backward of the upper turning body and an alarm in accordance with an operating state of machine and/or a state of equipment.

The first control unit 210 constitutes an "actual machine communication station" and includes an arithmetic processing device, a storage device and wireless communication equipment. The second control unit 220, which is a control unit for controlling operation of the component 222, includes the arithmetic processing device and the storage device. As a result of the arithmetic processing device reading out software (application software) and data from the storage device and executing arithmetic processing on the data in accordance with the software, the first control unit 210 and the second control unit 220 exert respective functions. The first control unit 210 and the second control unit 220 are connected so as to be able to perform communication with each other through an actual machine communication network (for example, a CAN).

### (Functions of actual machine diagnostic system)

Functions of the actual machine diagnostic system 120 having the configuration illustrated in FIG. 1 will be described.

### (Communication establishment function)

First, processing for establishing wireless communication (for example, WiFi ("WiFi" is registered trademark) or Bluetooth ("Bluetooth" is registered trademark)) between the terminal device 100 and the first control unit 210 (actual machine communication station) is executed. Specifically, whether or not a communication station identifier is input through the terminal input interface 101 is determined by the first functional element 121. The communication station identifier is an identifier like an SSID for identifying the actual machine communication station such as an access point of a wireless LAN. The communication station identifier includes, for example, a plurality of characters, numbers and/or symbols representing a serial number of the component 222 such as an engine and/or a battery that is mounted on the work machine 200 along with the actual machine communication station.

In a case where the communication station identifier is not input, a series of processing ends. On the other hand, in a case where the communication station identifier is input, it is tried to perform communication with the actual machine communication station identified by the communication station identifier.

To perform communication, the first functional element 121 generates an authenticator in accordance with a designation scheme on the basis of the communication station identifier. The authenticator may be generated in accordance with different designation schemes depending on a difference in data, characters, numbers or symbols constituting a designated portion of the communication station identifier.

The first functional element 121 causes the actual machine communication station identified by the communication station identifier to establish wireless communication using the generated authenticator.

### (First diagnostic processing function)

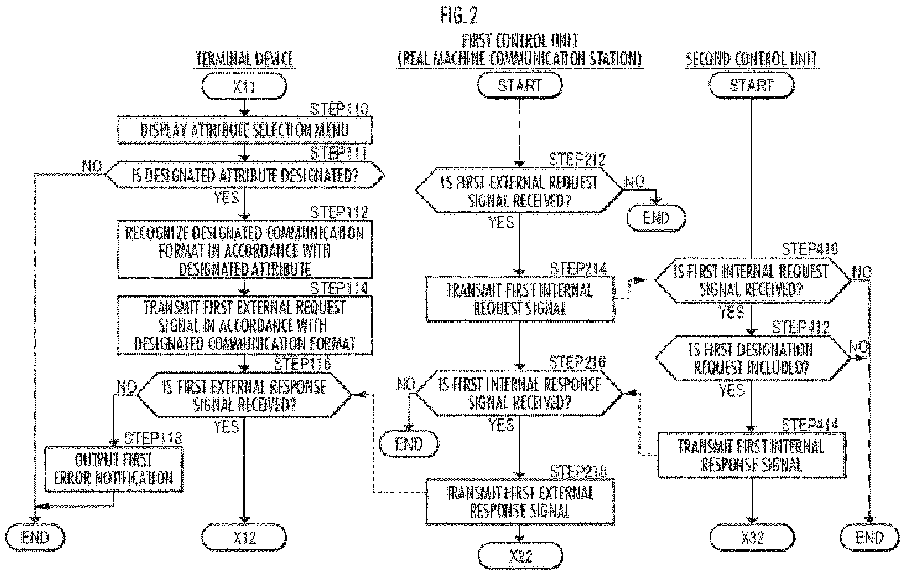

Specifically, the first functional element 121 outputs an attribute selection menu for selecting or designating a designated attribute regarding a designated attribute item of the work machine 200 to the terminal output interface 102 (FIG. 2/STEP 110). In the present embodiment, a plurality of attribute selection menus for indirectly or directly designating designated attributes respectively regarding a plurality of designated attribute items are output to the terminal output interface 102 at the same time or sequentially. Instead of the plurality of designated attribute items, a designated attribute regarding a single designated attribute item may be designated. Instead of all of the plurality of designated attribute items, attribute selection menus for part of the plurality of designated attribute items may be output to the terminal output interface 102.

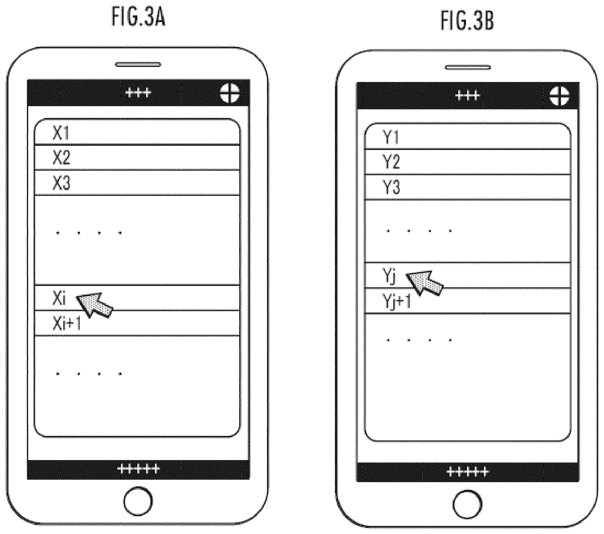

By this means, for example, as illustrated in FIG. 3A, a screen indicating one attribute selection menu including attributes (X1, X2, ... Xn) regarding one attribute item X = "a model of the engine or a type of the work machine 200" as options is output to the terminal output interface 102. Further, as illustrated in FIG. 3B, a screen indicating another attribute selection menu including attributes (Y1, Y2, ... Ym) regarding another attribute item Y = "a region or country in which the work machine 200 is located or an environmental rule applied in the country or region" as options is output to the terminal output interface 102.

One designated attribute item X = "a model of the engine or a type of the work machine 200" corresponds to an "internal cause attribute item" regarding an internal situation of the work machine 200. A manufacturer or country of manufacture of the work machine 200, a type, a model and/or specifications of the work machine 200 or the component 222, use history of the work machine 200, exchange history of the component 222, and the like, correspond to the internal cause attribute items. Another designated attribute item Y = "the region or country in which the work machine 200 is located or the environmental rule applied in the country or region" corresponds to an "external cause attribute item" regarding an external situation of the work machine 200. The region or country in which the work machine 200 is located and/or weather, law, culture, society, economic circumstances, and the like, specific to the region or country correspond to the external cause attribute items.

The designated attribute item may include not both but one of the external cause attribute item or the internal cause attribute item.

The designated attribute item may be determined among the components 222 of the work machine 200 in accordance with a first designated component designated through the terminal input interface 101.

The first functional element 121 determines whether or not the designated attribute is selected or designated through the terminal input interface 101 in accordance with the attribute selection menu within a designated period since output of the attribute selection menu (FIG. 2/STEP 111). Output of the attribute selection menu may be omitted, and part or all of the designated attributes may be directly input to a designation window output to the terminal output interface 102 using characters, numbers or symbols with a keypad constituting the terminal input interface 101.

In a case where the determination result is negative (FIG. 2/STEP 111: No), a series of processing ends. On the other hand, in a case where the determination result is affirmative (FIG. 2/STEP 111: Yes), the second functional element 122 recognizes a designated communication format in accordance with the designated attributes (Xi, Yj) (FIG. 2/STEP 112). The second functional element 122 causes the terminal device 100 to transmit a first external request signal to the first control unit 210 that is the actual machine communication station with which wireless communication is established in accordance with the designated communication format (FIG. 2/STEP 114). The first external request signal includes a "first designation request" regarding confirmation of a communication state of the actual machine communication network. This is a request for confirming whether or not information regarding the first designated component of the work machine 200 in accordance with the designated attributes (Xi, Yj) can be acquired.

The first control unit 210 (actual machine communication station) determines whether or not the first external request signal is received (FIG. 2/STEP 212). In a case where the determination result is negative (FIG. 2/STEP 212: No), a series of processing ends. On the other hand, in a case where the determination result is affirmative (FIG. 2/STEP 212: Yes), the first control unit 210 generates a first internal request signal by converting a format of the first external request signal into a format for communication in the actual machine communication network. After that, the first control unit 210 transmits the first external request signal to the second control unit 220 through the actual machine communication network (FIG. 2/STEP 214). The first internal request signal is generated so as to include part of data (such as, for example, identification data of the second control unit 220 and/or instruction data to the second control unit 220) included in the first external request signal in a format in which data except the part of data is changed.

The second control unit 220 determines whether or not the first internal request signal is received (FIG. 2/STEP 410). In a case where the determination result is negative (FIG. 2/STEP 410: No), a series of processing ends. On the other hand, in a case where the determination result is affirmative (FIG. 2/STEP 410: Yes), the second control unit 220 further determines whether or not the first internal request signal includes the first designation request (FIG. 2/STEP 412). For example, the "first designation request" includes a request for reading information (such as a serial number and a model) regarding the component 222 for which operation is controlled by the second control unit 220.

In a case where the determination result is negative (FIG. 2/STEP 412: No), a series of processing ends. On the other hand, in a case where the determination result is affirmative (FIG. 2/STEP 412: Yes), the second control unit 220 transmits a first internal response signal including a first designation response in response to the first designation request included in the first internal request signal to the first control unit 210 through the actual machine communication network (FIG. 2/STEP 414). For example, the "first designation response" includes information (such as a serial number and a model) regarding the component 222 read by the second control unit 220.

The first control unit 210 determines whether or not the first internal response signal is received (FIG. 2/STEP 216). In a case where the determination result is negative (FIG. 2/STEP 216: No), a series of processing ends. On the other hand, in a case where the determination result is affirmative (FIG. 2/STEP 216: Yes), the first control unit 210 generates a first external response signal by converting a format of the first internal response signal into a format for wireless communication with the terminal device 100. After that, the first control unit 210 transmits the first external response signal to the terminal device 100 through the actual machine communication network (FIG. 2/STEP 218).

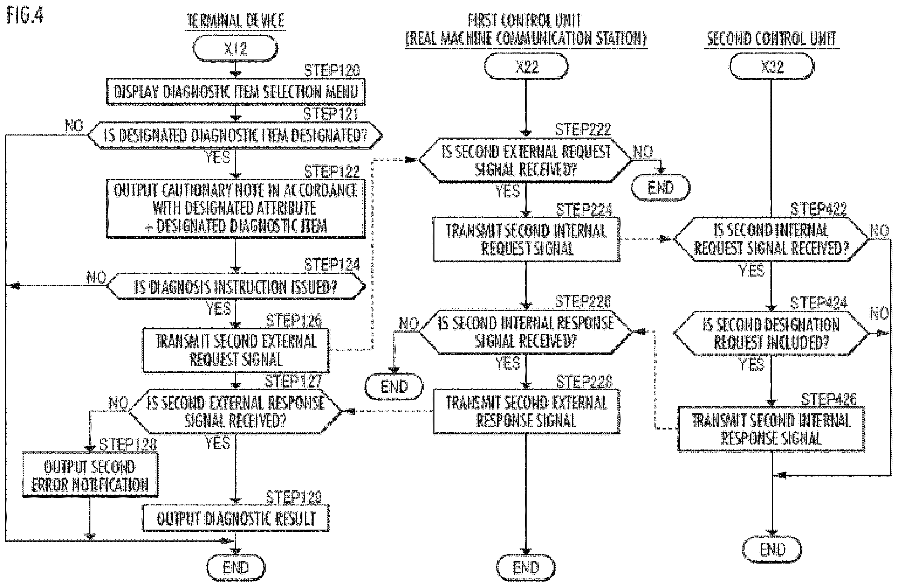

The second functional element 122 determines whether or not the terminal device 100 receives the first external response signal including the first designation response (or whether or not the first external response signal received by the terminal device 100 includes the first designation response) (FIG. 2/STEP 116). In a case where the determination result is negative (FIG. 2/STEP 116: No), the second functional element 122 outputs a first error notification indicating that communication between the first control unit 210 and the second control unit 220 through the actual machine communication network of the work machine 200 ends in failure to the terminal output interface 102 (FIG. 2/STEP 118), and a series of processing ends. On the other hand, in a case where the determination result is affirmative (FIG. 2/STEP 116: Yes), second diagnostic processing is performed in accordance with a flowchart indicated in FIG. 4.

### (Second diagnostic processing function)

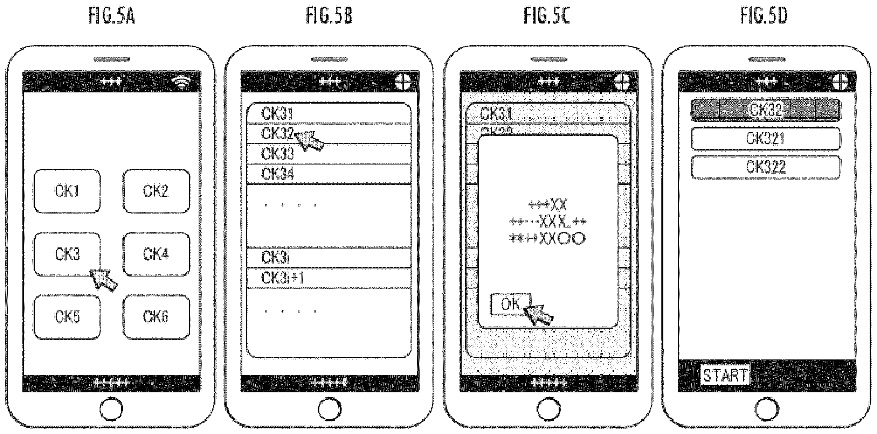

Specifically, the first functional element 121 outputs a diagnostic item selection menu for selecting a diagnostic item of the work machine 200 to the terminal output interface 102 (FIG. 4/STEP 120). By this means, for example, as illustrated in FIG. 5A, a primary diagnostic item selection menu of large categories CK1, CK2, ... for diagnosis (the component 222 to be diagnosed may be designated by each large category) is output to the terminal output interface 102.

The first functional element 121 determines whether or not a designated diagnostic item is selected or designated through the terminal input interface 101 in accordance with the diagnostic item selection menu within a designated period since output of the diagnostic item selection menu (FIG. 4/STEP 121). For example, in a case where the large category CK3 is selected from the primary diagnostic item selection menu by touch operation through the terminal input interface 101, as illustrated in FIG. 5B, a secondary diagnostic selection menu of small categories CK31, CK32, ... for diagnosis regarding the large category CK3 is output to the terminal output interface 102. Then, for example, the small category CK32 is selected from the secondary diagnostic item selection menu as the designated diagnostic item by touch operation through the terminal input interface 101. Output of the diagnostic item selection menu may be omitted, and the designated diagnostic item may be directly input using a keypad constituting the terminal input interface 101.

In a case where the determination result is negative (FIG. 4/STEP 121: No), a series of processing ends. On the other hand, in a case where the determination result is affirmative (FIG. 4/STEP 121: Yes), the second functional element 122 outputs cautionary note in accordance with the designated attributes (Xi, Yj) and the designated diagnostic item to the terminal output interface 102 (FIG. 4/STEP 122). By this means, for example, as illustrated in FIG. 5C, the cautionary note is indicated in a window displayed on a screen on which the secondary diagnostic item selection menu is output. For example, the "cautionary note" includes explanation that a switch and/or an actual machine operation lever constituting the actual machine input interface 201 needs to be designated, and that values of meters constituting the actual machine output interface 202 fall within a designated range in order to obtain a diagnostic result for the designated diagnostic item.

Subsequently, the second functional element 122 determines whether or not a diagnosis instruction is issued through the terminal input interface 101 within a designated period since output of the diagnostic item selection menu or the cautionary note (FIG. 4/STEP 124). For example, by an OK button illustrated in FIG. 5C being subjected to touch operation, the window is closed, and then, a screen including a START button is output to the terminal output interface 102 as illustrated in FIG. 5D immediately or after designated operation is performed. This screen includes windows CK321 and CK322 indicating diagnostic index values included in the designated diagnostic item CK32. The determination processing is executed in accordance with whether or not this START button is subjected to tap operation.

In a case where the determination result is negative (FIG. 4/STEP 124: No), a series of processing ends. On the other hand, in a case where the determination result is affirmative (FIG. 4/STEP 124: Yes), the second functional element 122 causes the terminal device 100 to transmit a second external request signal to the first control unit 210 that is the actual machine communication station with which wireless communication is established, in accordance with the designated communication format in accordance with the designated attributes (Xi, Yj) (FIG. 4/STEP 126). The second external request signal includes a second designation request regarding provision of information regarding the designated diagnostic item for a second component of the work machine 200.

The first control unit 210 (actual machine communication station) determines whether or not the second external request signal is received (FIG. 4/STEP 222). In a case where the determination result is negative (FIG. 4/STEP 222: No), a series of processing ends. On the other hand, in a case where the determination result is affirmative (FIG. 4/STEP 222: Yes), the first control unit 210 generates a second internal request signal by converting a format of the second external request signal into a format for communication in the actual machine communication network. After that, the first control unit 210 transmits the second external request signal to the second control unit 220 through the actual machine communication network (FIG. 4/STEP 224).

The second control unit 220 determines whether or not the second internal request signal is received (FIG. 4/STEP 422). In a case where the determination result is negative (FIG. 4/STEP 422: No), a series of processing ends. On the other hand, in a case where the determination result is affirmative (FIG. 4/STEP 422: Yes), the second control unit 220 further determines whether or not the second internal request signal includes a second designation request (FIG. 4/STEP 424). For example, the "second designation request" includes a request for a diagnostic result of the component 222 for which operation is controlled by the second control unit 220.

In a case where the determination result is negative (FIG. 4/STEP 424: No), a series of processing ends. On the other hand, in a case where the determination result is affirmative (FIG. 4/STEP 424: Yes), the second control unit 220 transmits a second internal response signal including a second designation response in response to the second designation request included in the second internal request signal to the first control unit 210 through the actual machine communication network (FIG. 4/STEP 426). For example, the "second designation response" includes diagnostic results representing states of the components 222 detected through a designated sensor by the second control unit 220.

The first control unit 210 determines whether or not the second internal response signal is received (FIG. 4/STEP 226). In a case where the determination result is negative (FIG. 4/STEP 226: No), a series of processing ends. On the other hand, in a case where the determination result is affirmative (FIG. 4/STEP 226: Yes), the first control unit 210 generates a second external response signal by converting a format of the second internal response signal into a format for wireless communication with the terminal device 100. After that, the first control unit 210 transmits the second external response signal to the terminal device 100 through the actual machine communication network (FIG. 4/STEP 228).

The second functional element 122 determines whether or not the terminal device 100 receives the second external response signal including the second designation response (or whether or not the second external response signal received by the terminal device 100 includes the second designation response) (FIG. 4/STEP 127). In a case where the determination result is negative (FIG. 4/STEP 127: No), the second functional element 122 outputs a second error notification indicating that diagnosis of the component 222 (designated component) or acquisition of the diagnostic result ends in failure to the terminal output interface 102 (FIG. 4/STEP 128), and a series of processing ends. On the other hand, in a case where the determination result is affirmative (FIG. 4/STEP 127: Yes), the diagnostic result of the designated component among the components 222 is output to the terminal output interface 102 (FIG. 4/STEP 129), and a series of processing ends.

### (Operation and effects)

According to the actual machine diagnostic system 120 as one embodiment of the present invention that exerts the functions, the first external request signal is transmitted from the terminal device 100 to the actual machine communication station 210 for which wireless communication with the terminal device 100 is established in accordance with the designated communication format (see FIG. 2/STEP 114).

The "designated communication format" is determined in accordance with the designated attribute designated through the terminal input interface 101 for the designated attribute item regarding the work machine 200 (see FIG. 2/STEP 111 -> STEP 112). Further, the "designated communication format" is converted by the actual machine communication station 210 into the actual machine communication format for acquiring information regarding the designated component 222 (the first designated component) of the designated work machine 200 by utilizing communication in the actual machine communication network.

Further, the first external response signal regarding the communication state of the actual machine communication network in the designated work machine 200 on which the actual machine communication station 210 is mounted is transmitted from the actual machine communication station 210 to the terminal device 100 (see FIG. 2/STEP 212 → STEP 214 -> STEP 410 -> STEP 412 -> STEP 414 -> STEP 216 -> STEP 218).

It is possible to confirm a situation where an abnormality occurs in the communication state in the actual machine communication network mounted on the designated work machine 200, and eventually, a situation where it is difficult or impossible to acquire information regarding the designated component of the designated work machine 200 through communication by way of the actual machine communication network on the basis of the external response signal received by the terminal device 100 or a reception situation of the external response signal. It is therefore possible to avoid a situation where acquisition of information regarding the designated component 222 (first designated component) as a diagnostic result of the designated work machine 200 using the terminal device 100 is tried despite such a situation, so that improvement of efficiency of the diagnostic processing can be achieved.

Further, cautionary note regarding the designated diagnostic item designated through the terminal input interface 101 is output to the terminal output interface 102 (see FIG. 4/STEP 121 -> STEP 122 and FIG. 5A to FIG. 5C). Further, the diagnostic result regarding the designated diagnostic item, that is, information regarding the designated component 222 (second designated component) of the designated work machine 200 is output to the terminal output interface 102 in accordance with confirmation of the cautionary note before diagnosis of the designated work machine 200 through the terminal input interface 101 (see FIG. 4/STEP 222 -> STEP 224 -> STEP 422 -> STEP 424 → STEP 426 -> STEP 226 -> STEP 228 -> STEP 127 -> STEP 129).

This enables a user who sees the cautionary note through the terminal output interface 102 to take preliminary measures in advance in view of the designated diagnostic item of the designated work machine 200. This results in avoiding a situation where diagnosis of the designated diagnostic item of the designated work machine 200 is tried in a state where appropriate preliminary measures are not taken, and eventually, a situation where the trial ends in failure, so that improvement of diagnosis efficiency of the designated work machine 200 is achieved.

### (Other embodiments of the present invention)

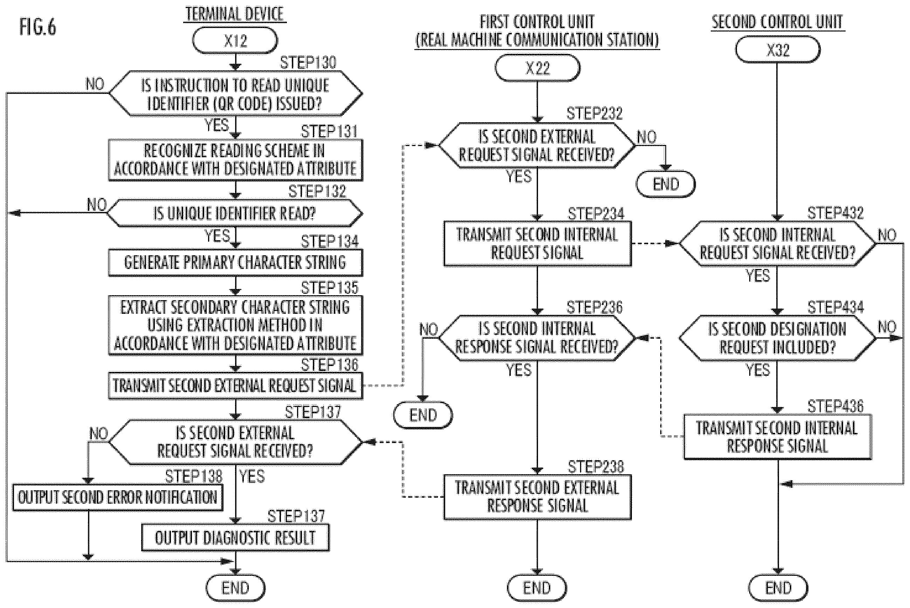

In place of or in addition to the flowchart indicated in FIG. 4, processing in accordance with a flowchart indicated in FIG. 6 may be executed. Processing from STEP 130 to STEP 136 in the flowchart indicated in FIG. 6 is different from the processing from STEP 120 to STEP 126 in the flowchart indicated in FIG. 4. Other processing in the flowchart indicated in FIG. 6 is substantially similar to other processing in the flowchart indicated in FIG. 4.

Specifically, the second functional element 122 determines whether or not an instruction to read a unique identifier from a designated medium attached to the second designated component among the components 222 is issued (FIG. 6/STEP 130).

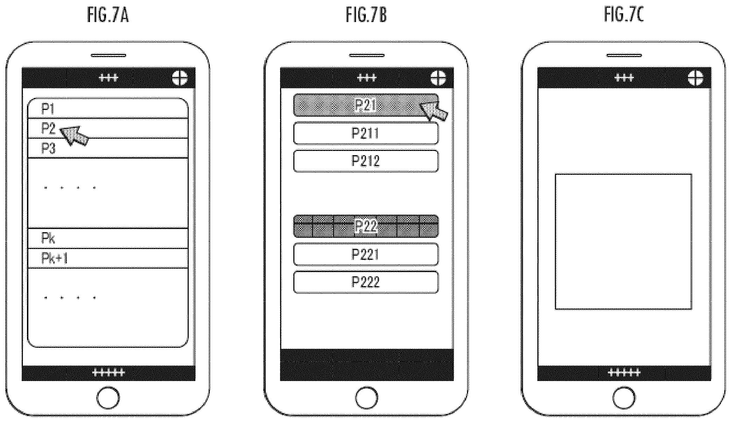

For example, as illustrated in FIG. 7A, a screen indicating a selection menu including options P1, P2, ... of the components 222 of the work machine 200 is output to the terminal output interface 102. As a result of the option P2 being selected from the selection menu, a component 222 (for example, a diesel particulate filter (DPF) attached to the injector or the engine) corresponding to the option P2 is selected as the second designated component.

In accordance with this, for example, as illustrated in FIG. 7B, a screen indicating buttons representing components P21, P22, ... of the second designated component, and a window for inputting identifiers or codes for specifying the respective components P21, P22, ... is output to the terminal output interface 102. Whether or not an instruction to read a unique identifier from the designated medium is issued is determined in accordance with whether or not there is touch operation of the buttons representing the components P21, P22, ... in this screen.

In a case where the determination result is negative (FIG. 6/STEP 130: No), a series of processing ends. On the other hand, in a case where the determination result is affirmative (FIG. 6/STEP 130: Yes), the second functional element 122 recognizes a reading scheme of a unique identifier in accordance with the designated attribute of the work machine 200 (FIG. 6/STEP 131).

Further, the second functional element 122 determines whether or not a unique identifier is read by a non-contact sensor mounted on the terminal device 100 (FIG. 6/STEP 132).

For example, in a case where a button corresponding to the component P21 (for example, the injector that is one part of the engine) is subjected to touch operation in the screen illustrated in FIG. 7B, as illustrated in FIG. 7C, a screen for reading or scanning a two-dimensional code attached to the injector with a camera that is a non-contact sensor in accordance with the reading scheme is output to the terminal output interface 102. The two-dimensional code corresponds to a barcode and/or a character and symbol string as well as a QR code (registered trademark), and an RFID tag corresponds to the designated medium. Whether or not a unique identifier is read is determined in accordance with whether or not a worker near the work machine 200 scans the two-dimensional code attached to the component of the work machine 200 in accordance with the screen using the terminal device 100.

In a case where the determination result is negative (FIG. 6/STEP 132: No), a series of processing ends. On the other hand, in a case where the determination result is affirmative (FIG. 6/STEP 132: Yes), the second functional element 122 converts the two-dimensional code that is the unique identifier into a primary character string (FIG. 6/STEP 134).

Further, the second functional element 122 converts the primary character string into a secondary character string in accordance with a conversion scheme in accordance with the designated attributes (Xi, Yj) (FIG. 6/STEP 135). For example, a result of extracting part of the primary character string in accordance with the conversion scheme is generated as the secondary character string.

Then, the second functional element 122 causes the terminal device 100 to transmit a second external request signal to the first control unit 210 that is the actual machine communication station with which wireless communication is established, in accordance with the designated communication format (FIG. 6/STEP 136). The second external request signal includes a second designation request regarding control characteristics and/or correction information of the component 222 in accordance with the second character string.

The first control unit 210 (actual machine communication station) determines whether or not the second external request signal is received (FIG. 6/STEP 232). In a case where the determination result is negative (FIG. 6/STEP 230: No), a series of processing ends. On the other hand, in a case where the determination result is affirmative (FIG. 6/STEP 232: Yes), the first control unit 210 generates a second internal request signal by converting a format of the second external request signal into a format for communication in the actual machine communication network. After that, the first control unit 210 transmits the second external request signal to the second control unit 220 through the actual machine communication network (FIG. 6/STEP 234).

The second control unit 220 determines whether or not the second internal request signal is received (FIG. 6/STEP 432). In a case where the determination result is negative (FIG. 6/STEP 432: No), a series of processing ends. On the other hand, in a case where the determination result is affirmative (FIG. 6/STEP 432: Yes), the second control unit 220 further determines whether or not the second internal request signal includes a second designation request (FIG. 6/STEP 434). For example, the "second designation request" includes a request for a diagnostic result of the component 222 for which operation is controlled by the second control unit 220.

In a case where the determination result is negative (FIG. 6/STEP 434: No), a series of processing ends. On the other hand, in a case where the determination result is affirmative (FIG. 6/STEP 434: Yes), the second control unit 220 transmits a second internal response signal including a second designation response in response to the second designation request included in the second internal request signal to the first control unit 210 through the actual machine communication network (FIG. 6/STEP 436). For example, the "second designation response" includes a result as to whether or not the second control unit 220 can correctly receive parameters to be applied to control of the component 222.

The first control unit 210 determines whether or not the second internal response signal is received (FIG. 6/STEP 236). In a case where the determination result is negative (FIG. 6/STEP 236: No), a series of processing ends. On the other hand, in a case where the determination result is affirmative (FIG. 6/STEP 236: Yes), the first control unit 210 generates a second external response signal by converting a format of the second internal response signal into a format for wireless communication with the terminal device 100. After that, the first control unit 210 transmits the second external response signal to the terminal device 100 through the actual machine communication network (FIG. 6/STEP 238).

The second functional element 122 determines whether or not the terminal device 100 receives the second external response signal including the second designation response (or the second external response signal received by the terminal device 100 includes the second designation response) (FIG. 6/STEP 137). In a case where the determination result is negative (FIG. 6/STEP 137: No), the second functional element 122 outputs a second error notification indicating that diagnosis of the component 222 (designated component) or acquisition of the diagnostic result ends in failure to the terminal output interface 102 (FIG. 6/STEP 138), and a series of processing ends. On the other hand, in a case where the determination result is affirmative (FIG. 6/STEP 137: Yes), the diagnostic result of the component 222 or the second designated component is output to the terminal output interface 102 (FIG. 6/STEP 139), and a series of processing ends.

### (Operation and effects)

According to the actual machine diagnostic system 120 as another embodiment of the present invention that exerts the functions, the second external request signal based on the designated attribute regarding the designated work machine 200 designated through the terminal input interface 101 and the unique identifier read in a non-contact manner from the designated component 222 with a non-contact sensor mounted on the terminal device 100 is transmitted to the actual machine communication station 210 mounted on the designated work machine 200 (see FIG. 6/STEP 130 -> ... STEP 136). Then, the second external response signal representing information regarding the designated component 222 in response to the second external request signal is transmitted from the actual machine communication station 210 to the terminal device 100, and the information as the diagnostic result of the designated component is output to the terminal output interface 102 (see FIG. 6/STEP 232 -> STEP 234 -> STEP 432 -> STEP 434 -> STEP 436 -> STEP 236 -> STEP 238 -> STEP 137 -> STEP 139).

This can improve user-friendliness when information regarding the designated component 222 (second designated component) mounted on the designated work machine 200 is input in a format intended by the user as work for changing control parameters of the designated work machine 200 having the designated attribute.

In the actual machine diagnostic system,
the designated communication format is preferably determined in accordance with the designated attribute designated through an input interface of the terminal device for the designated attribute item determined in accordance with the designated component designated through the input interface of the terminal device.

According to the actual machine diagnostic system having the configuration, the designated component for which information is to be output through an output interface of the terminal device or for which diagnosis is to be performed can be designated through the input interface of the terminal device.

In the actual machine diagnostic system,
the designated communication format is preferably determined in accordance with the designated attribute designated through the input interface of the terminal device for the designated attribute item including one or both of an internal cause attribute item regarding an internal situation of the work machine or an external cause attribute item regarding an external situation of the work machine determined in accordance with the designated component designated through the input interface of the terminal device.

According to the actual machine diagnostic system having the configuration, the terminal device and the actual machine communication station perform communication in accordance with the designated communication format determined in accordance with the designated attribute including one or both of the internal cause attribute item or the external cause attribute item through the input interface of the terminal device. Further, information regarding the designated component of the designated work machine on which the actual machine communication station is mounted can be output to the output interface of the terminal device.

The actual machine diagnostic system preferably includes an internal functional element which causes a selection menu for selecting one option as the designated attribute among attributes that are a plurality of options through the input interface of the terminal device to be output to the output interface of the terminal device, for at least one designated attribute item.

According to the actual machine diagnostic system having the configuration, it is possible to make it easier for a user to designate the designated attribute for at least one designated attribute item regarding the designated work machine through the input interface of the terminal device, so that user-friendliness when information regarding the designated component of the designated work machine is acquired can be improved.

An actual machine complex diagnostic system of the present invention includes the actual machine diagnostic system and the actual machine communication station, and
the actual machine communication station
receives the external request signal from the actual machine diagnostic system,
generates an internal request signal by converting a format of the external request signal from the designated communication format into the actual machine communication format,
transmits the internal request signal to a designated control unit mounted on the designated work machine for controlling operation of the designated component through the actual machine communication network,
receives an internal response signal in response to the internal request signal from the designated control unit through the actual machine communication network,
generates an external response signal by converting a format of the internal response signal from the actual machine communication format into the designated communication format, and
transmits the external response signal to the actual machine diagnostic system in accordance with the designated communication format.

According to the actual machine complex diagnostic system having the configuration, a communication state in the actual machine communication network is confirmed in accordance with transmission/reception results of the internal request signal that is a result of converting the format of the external request signal and the internal response signal in response to the internal request signal between the actual machine communication station mounted on the designated work machine and the designated control unit. Further, it is possible to confirm a situation where an abnormality occurs in the communication state in the actual machine communication network, and eventually, a situation where it is difficult or impossible to acquire information regarding the designated component of the designated work machine through communication by way of the actual machine communication network on the basis of the external response signal that is a result of converting the format of the internal response signal or a reception situation of the external response signal.

It is therefore possible to avoid a situation where acquisition of information regarding the designated component as a diagnostic result of the designated work machine using the terminal device is tried despite such a situation, so that improvement of efficiency of the diagnostic processing can be achieved.

### Reference Signs List

- 100: Terminal device
- 101: Terminal input interface
- 102: Terminal output interface
- 120: Real machine diagnostic system
- 121: First functional element (internal functional element)
- 122: Second functional element (external functional element)
- 200: Work machine
- 210: First control unit (actual machine communication station)
- 220: Second control unit

## Claims

1. An actual machine diagnostic system comprising:
an external functional element which causes a terminal device to transmit an external request signal to an actual machine communication station for which wireless communication with the terminal device is established in accordance with a designated communication format and causes the terminal device to receive from the actual machine communication station an external response signal regarding a communication state of an actual machine communication network in a designated work machine on which the actual machine communication station is mounted,
wherein the designated communication format is determined in accordance with a designated attribute designated through an input interface of the terminal device for a designated attribute item regarding a work machine and is converted into an actual machine communication format for acquiring information regarding a designated component of the designated work machine by utilizing communication in the actual machine communication network by the actual machine communication station.

2. The actual machine diagnostic system according to claim 1,
wherein the designated communication format is determined in accordance with the designated attribute designated through an input interface of the terminal device for the designated attribute item determined in accordance with the designated component designated through the input interface of the terminal device.

3. The actual machine diagnostic system according to claim 1 or 2,
wherein the designated communication format is determined in accordance with the designated attribute designated through the input interface of the terminal device for the designated attribute item including one or both of an internal cause attribute item regarding an internal situation of the work machine or an external cause attribute item regarding an external situation of the work machine determined in accordance with the designated component designated through the input interface of the terminal device.

4. The actual machine diagnostic system according to any one of claims 1 to 3, comprising:
an internal functional element which causes a selection menu for allowing selection of one option as the designated attribute among attributes that are a plurality of options through the input interface of the terminal device to be output to an output interface of the terminal device for at least one designated attribute item.

5. An actual machine complex diagnostic system including the actual machine diagnostic system according to any one of claims 1 to 4, and the actual machine communication station,
wherein the actual machine communication station
receives the external request signal from the actual machine diagnostic system,
generates an internal request signal by converting a format of the external request signal from the designated communication format into the actual machine communication format,
transmits the internal request signal to a designated control unit mounted on the designated work machine for controlling operation of the designated component through the actual machine communication network,
receives an internal response signal in response to the internal request signal from the designated control unit through the actual machine communication network,
generates an external response signal by converting a format of the internal response signal from the actual machine communication format into the designated communication format, and
transmits the external response signal to the actual machine diagnostic system in accordance with the designated communication format.

6. An actual machine diagnostic method to be executed by application software installed in a terminal device, the actual machine diagnostic method comprising:
a step of causing a terminal device to transmit an external request signal to an actual machine communication station for which wireless communication with the terminal device is established, in accordance with a designated communication format; and
a step of causing the terminal device to receive from the actual machine communication station an external response signal regarding a communication state of an actual machine communication network in a designated work machine on which the actual machine communication station is mounted,
wherein the designated communication format is determined in accordance with a designated attribute designated through an input interface of the terminal device for a designated attribute item regarding a work machine and is converted into an actual machine communication format for acquiring information regarding a designated component of the designated work machine by utilizing communication in the actual machine communication network by the actual machine communication station.
